# EUROPÄISCHE PATENTANMELDUNG

(11) **EP 1 369 219 A1**
(43) Veröffentlichungstag der Anmeldung: **10.12.2003**
(21) Anmeldenummer: 03012398.8
(22) Anmeldetag: 30.05.2003
(51) Int. Cl.: B29C 47/68

(54) **Reinigungsvorrichtung für Siebscheiben**

(30) Priorität: 07.06.2002 DE 10225601
(71) Anmelder: GNEUSS KUNSTSTOFFTECHNIK GmbH, D-32549 Bad Oeynhausen (DE)
(72) Erfinder: Gneuss, Detlef, 32545 Bad Oeynhausen (DE)
(74) Vertreter: Grosse, Wolf-Dietrich, Dipl.-Ing.

(57) **Zusammenfassung**

Eine Vorrichtung (1) zur Reinigung eines Schmelzefilters, der zur Filterung von Schmelzen, insbesondere Kunststoffschmelzen in Extrudern, vorgesehen ist und zumindest eine bewegliche, insbesondere drehbare, Siebscheibe (2) mit einem oder mehreren Siebeinsätzen (3) umfaßt, wobei zumindest ein Siebeinsatz (3) derart in einen Strom (5) von Reinigungsmittel innerhalb der Vorrichtung (1) bewegbar ist, dass der Siebeinsatz (3) ober- oder unterhalb einer Beaufschlagungsöffnung (6) eines Reinigungskanals (4) liegt, wird so ausgebildet, dass der Siebeinsatz (3) in der Siebscheibe mit Abstand zu der der Beaufschlagungsöffnung (6) zugewandten Oberfläche (7) der Siebscheibe (2) angeordnet ist.

## Beschreibung

Die Erfindung betrifft eine Vorrichtung zur Reinigung von Schmelzefiltern, die zur Filterung von Schmelzen, insbesondere Kunststoffschmelzen in Extrudern, vorgesehen sind und zumindest eine bewegliche Siebscheibe mit einem oder mehreren einsetzbaren Siebeinsätzen umfassen, nach dem Oberbegriff des Anspruchs 1.

Schmelzefilter dienen dazu, beispielsweise in Extrudern verwendete Kunststoffschmelzen mechanisch von Verunreinigungen zu befreien. Hierfür weist ein Schmelzefilter eine metallische Siebscheibe auf, die mit mehreren Siebeinsätzen, die über den Umfang aufeinander folgen, versehen ist.

Die Siebeinsätze können an etwa metallischen Zwischenrahmen gehalten und durch diese Zwischenrahmen voneinander beabstandet sein. Die Zwischenrahmen bilden somit gleichzeitig Trennstege aus. Die Siebeinsätze selbst können ebenfalls metallisch ausgebildet sein und mit senkrecht zur Erstreckungsebene der Siebscheibe verlaufenden Durchlaufkanälen versehen sein, die aufgrund ihrer geringen Durchmesser eine Filterfunktion ausüben.

Dabei ist es wünschenswert, die Siebeinsätze nach einer gewissen Funktionszeit einer Reinigung zu unterziehen, um mechanische Verschmutzungen, welche die Lochkanäle zusetzen würden, zu entfernen. Ohne die Reinigung würde schnell ein erheblicher Gegendruck durch zugesetzte Siebbereiche entstehen, der die Funktion der Siebe stören würde.

Zur Reinigung werden die Siebeinsätze mit einem Strom von Reinigungsmittel beaufschlagt, welcher der Durchtrittsrichtung des Schmelzestroms durch die Siebscheiben entgegengesetzt ist. Wenn also der Schmelzestrom von oben nach unten die Siebe durchläuft, wird der Reinigungsstrom die Siebe von unten nach oben durchlaufen, sofern diese ihre Orientierung während ihrer Reinigung beibehalten.

Dabei soll die Reinigung der Siebscheiben ebenso effektiv und schnell ermöglicht werden wie die Filterung der Schmelze, so dass beide Funktionen aufeinander abgestimmt durchgeführt werden können.

Die DE 299 08 735 U1 offenbart eine gattungsgemäße Filtereinrichtung für die Reinigung von Kunststoffschmelzen. Hier endet der Rückspülschlitz unmittelbar vor dem mit der Siebscheibe eine Ebene bildenden Siebeinsatz. Damit ist gewährleistet, daß der Siebeinsatz mit hohen Druck rückgespült werden kann. Nachteilig ist jedoch, daß der Rückspülschlitz bedingt durch die mechanischen Festigkeitsanforderungen der Filtereinrichtung verhältnismäßig weit vom Einsatzort der rückgespülten Siebeinsätze, dem Schmelzkanal, entfernt ist, so daß sich die der Rückspülung dienende, im Siebeinsatz verbleibende Kunststoffschmelze bedingt durch die große Hitze auf dem Weg vom Rückspülort zum Schmelzekanal verändert. Diese verändernde Schmelze gelangt dann in den Schmelzekanal und führt zu Ausschuß.

Die DE 42 35 523 C1 offenbart bereits Siebeinsätze, deren Oberfläche gegenüber der Siebscheibe zurückspringen. Eine Rückspülmöglichkeit wird bei dieser Siebvorrichtung für Kunststoffschmelzen nicht offenbart bzw. angeregt.

Der Erfindung liegt die Aufgabe zugrunde, die Effektivität der Reinigung von Siebscheiben der genannten Art zu verbessern.

Die Erfindung löst dieses Problem durch eine Vorrichtung mit den Merkmalen des Anspruchs 1. Hinsichtlich vorteilhafter Ausgestaltungen wird auf die abhängigen Ansprüche 2 bis 5 verwiesen.

Erfindungsgemäß ist mit dem Abstand der Siebeinsätze von der Beaufschlagungsöffnung ein Vorflutraum innerhalb der Siebscheibe erreicht. Dieser Vorflutraum kann gleichmäßig mit Reinigungsflüssigkeit, z.B. Reinigungsschmelze, befüllt werden, so dass deren Durchsatz erhöht ist. Insbesondere wird dadurch erreicht, dass schon früher und auch länger als bei Reinigungsvorrichtungen ohne Vorflutraum die sich bei großer Hitze und ohne Schmelzenachschub in der Filtrierstation chemisch ändernde Schmelze durch Reinigungsschmelze ausgetauscht werden kann. Es kann eine größere Fläche der Siebscheibe gleichzeitig gereinigt werden. Es ist gewährleistet, dass ein Siebeinsatz bis zum Trennsteg zum nächsten Siebeinsatz vollständig mit Flüssigkeit beaufschlagt werden kann, auch wenn die Beaufschlagungsöffnung nicht den jeweiligen Siebeinsatz vollständig überstreicht. Beispielweise bei in Draufsicht nierenförmigen Siebeinsätzen können bei einer radial erstreckten Beaufschlagungsöffnung mehrere Siebeinsätze gleichzeitig beaufschlagt werden, da die Öffnung gleichzeitig mehrere Siebeinsätze tangieren kann.

Die Beaufschlagungsöffnung kann relativ klein ausgeführt werden; es ist dennoch aufgrund der erfindungsgemäßen Ausbildung des Vorflutraums möglich, eine große Fläche von Siebeinsätzen zu überstreichen. Durch den Vorflutraum wird der Druck der Reinigungsflüssigkeit verringert und turbulente Strömungen werden vermieden. Der Siebeinsatz erfährt eine Vorreinigung. Im Bereich der erweiterten Beaufschlagungsöffnung strömt die Reinigungsflüssigkeit im Wesentlichen laminar und mit größerem Druck, um die endgültige Reinigung zu bewirken.

Durch die Effektivität der Reinigungsvorrichtung kann diese besonders vorteilhaft mit einer Filtervorrichtung für eine Schmelze in einer Maschine derart verbunden sein, dass die Siebeinsätze durch Drehung der Siebscheibe jeweils der Reinigungsvorrichtung oder der Filtervorrichtung zugeführt werden, so dass beide Prozesse zeitgleich ablaufen können.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: eine schematische querschnittliche Ansicht einer erfindungsgemäßen Vorrichtung,

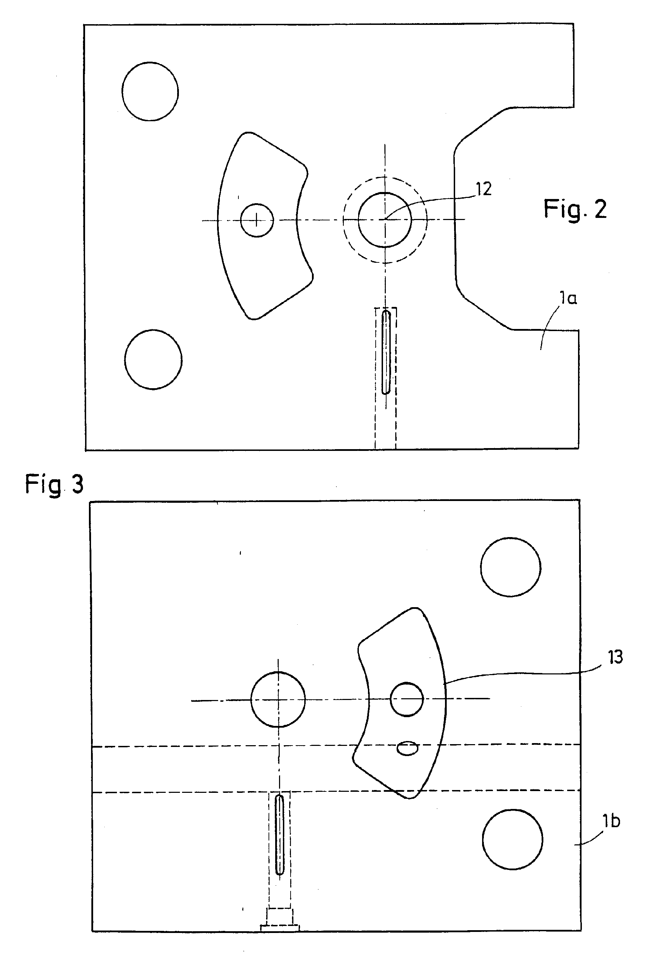

- Fig. 2: eine Ansicht in Richtung des Pfeils II in Fig. 1,
- Fig. 3: eine Ansicht in Richtung des Pfeils III in Fig. 1, und
- Fig. 4: eine Draufsicht auf eine Siebscheibe mit darunter liegendem Vorflutraum entsprechend einer Ansicht in Richtung des Pfeils IV in Fig. 1.

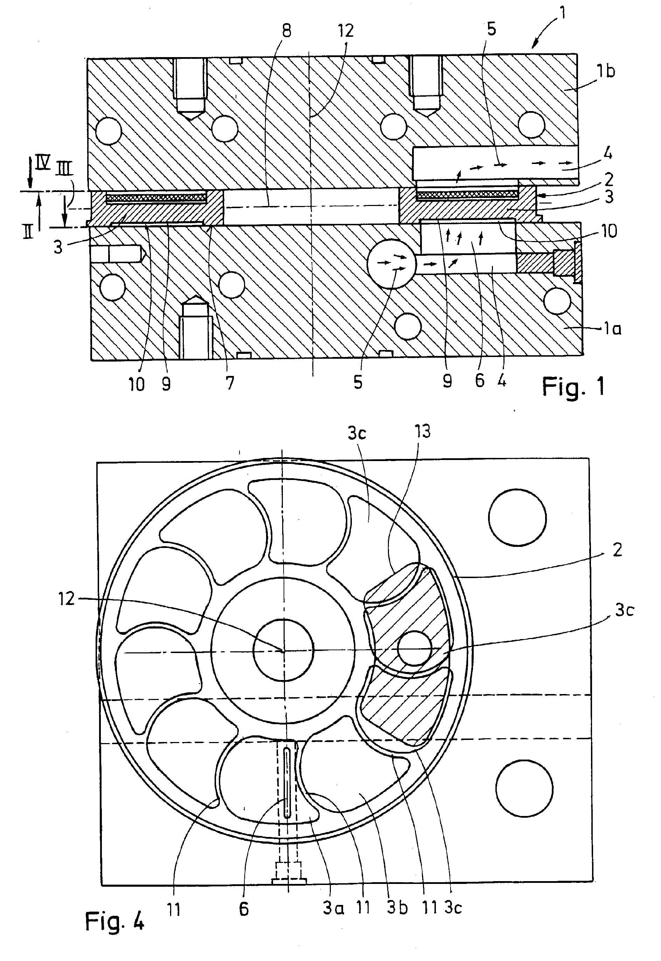

In Fig. 1 ist schematisch eine Reinigungsvorrichtung 1 für eine Siebscheibe 2 dargestellt, die mit mehreren Siebeinsätzen 3 versehen ist. Typisch sind etwa zehn bis vierzehn Siebeinsätze 3, die auswechselbar sein können. In Reinigungsstellung ist die Siebscheibe 2 zwischen zwei parallelen Plattenkörpern 1a, 1b innerhalb eines Reinigungskanals 4 gehalten, wobei in Flußrichtung 5 eines Reinigungsfluids (Fig. 1) eine Beaufschlagungsöffnung 6 für die Beaufschlagung der Siebscheibe 2 vorgesehen ist.

Im Ausführungsbeispiel hat die Siebscheibe 2 eine kreisrunde Umrißgestalt (Fig. 4), und die Beaufschlagungsöffnung 6 ist schlitzförmig ausgebildet; sie weist zumindest eine erhebliche Erstreckung in radialer Richtung der Siebscheibe 2 auf und reicht bis zu deren äußerem Rand. Die Siebscheibe 2 ist um eine zentrale Achse 12 drehbar, so dass die Siebeinsätze 3 nacheinander in den von der Beaufschlagungsöffnung 6 überstrichenen Bereich gelangen können.

Der aus der Beaufschlagungsöffnung 6 austretende Fluidstrom 5 kann auf mehrere Siebeinsätze 3 treffen. In der in Figur 4 eingezeichneten Stellung der Siebscheibe 2 wird lediglich ein Siebeinsatz 3a mit Fluid 5 beaufschlagt. Bei weiterer Rotation der Siebscheibe 2 um die Achse 12 werden aufgrund der Nierenform gleichzeitig die Siebeinsätze 3a und 3b beaufschlagt.

Die Siebeinsätze 3 sind senkrecht zur Erstreckungsebene 8 der Siebscheibe 2 mit Abstand zu der, der Beaufschlagungsöffnung 6 zugewandten Oberfläche 7 angeordnet und gegenüber dieser somit einwärts versetzt. Dadurch entsteht vor der Vorderkante 9 der Siebeinsätze 3 ein Vorflutraum 10, der seitlich nach außen von Trennstegen 11, welche die Siebeinsätze 3 voneinander trennen, begrenzt ist. Die Siebeinsätze 3 können auswechselbar gehalten sein. Der Vorflutraum 10 liegt innerhalb der Siebscheibe 2.

Auch mit dem Vorflutraum 10 kann die Laminarität der Strömung 5 beibehalten werden, was für eine gleichmäßige Reinigung besonders günstig ist. Im Vorflutraum 10 liegen dann annähernd gleiche Verhältnisse für alle Lochkanäle, ausgenommen denen, die der Beaufschlagungsöffnung 6 gegenüberstehen vor, so dass die hier gezeigten Siebeinsätze 3a, 3b beide gleichmäßig gereinigt werden. Es ergibt sich somit gegenüber herkömmlichen Reinigungsvorrichtungen eine erhebliche Vergrößerung der aktiv gleichzeitig zu reinigenden Fläche.

Hierfür ist ein Mindestabstand der Vorderkante 9 des Siebeinsatzes 3 gegenüber der Oberfläche 7 erforderlich, der mehrere Millimeter beträgt. Typisch sind Abstände von etwa zwei bis zwölf Millimetern, die in Abhängigkeit von der Viskosität der Schmelze vorgebbar sind. Ein guter Wert liegt etwa bei vier Millimetern, wobei dann einerseits der Strömungswiderstand im Vorflutraum 10 nicht zu groß wird und andererseits die Strömung 5 nicht abreißt und Turbulenzen vermeidbar sind.

Da der Vorflutraum 10 innerhalb der Siebscheibe 3 liegt (Fig. 1), werden erfindungsgemäß diejenigen Siebeinsätze 3a, 3b die nicht vollständig, sondern nur mit einigen Lochkanälen vor der Beaufschlagungsöffnung 6 liegen, dennoch zeitgleich vollständig mit Reinigungsfluid 5 beaufschlagt. Dieses ist ermöglicht durch den Vorflutraum 10, der vollständig mit Fluid angefüllt wird und dessen Randerstrekkung erst durch die Trennstege 11 begrenzt ist. Die in einem Reinigungsgang mit Reinigungsfluid 5 beaufschlagbare Fläche der Siebscheibe 2 ist damit erheblich vergrößert.

In jedem Fall kann die Siebscheibe 2 gleichzeitig auch sehr effektiv als Schmelzefilter eingesetzt werden und beispielsweise durch kontinuierliche oder getaktete Drehung um die Achse 12 jeweils teilweise in Reinigungs- und teilweise in Filterstellung stehen. Solche Bereiche, die in Filterstellung sich bereichsweise zugesetzt haben, können dann direkt der Reinigungsstellung zugeführt werden. Andere Siebeinsätze 3c können gleichzeitig unterhalb einer Schmelzezuführöffnung 13 des oberen Plattenkörpers 1b stehen, die diese Bereiche 3c mit zu filternder Schmelze beaufschlagt und sich über mehrere Siebeinsätze 3c erstrecken kann (Fig. 4).

### Bezugszeichenliste:

- 1: Vorrichtung,
- 1a: Plattenkörper
- 1b: Plattenkörper
- 2: Siebscheibe,
- 3: Siebeinsatz,
- 3a: Siebeinsatz,
- 3b: Siebeinsatz,
- 3c: Siebeinsatz,
- 4: Reinigungskanal,
- 5: Reinigungsfluidströmung,
- 6: Beaufschlagungsöffnung,
- 7: Oberfläche,
- 8: Erstreckungsebene,
- 9: Vorderkante,
- 10: Vorflutraum,
- 11: Trennsteg,
- 12: Achse,
- 13: Schmelzezuführöffnung.

## Patentansprüche

1. Vorrichtung (1) zur Reinigung eines Schmelzefilters, der zur Filterung von Schmelzen, insbesondere Kunststoffschmelzen in Extrudern, vorgesehen ist und zumindest eine bewegliche, insbesondere drehbare, Siebscheibe (2) mit einem oder mehreren Siebeinsätzen (3) umfaßt, wobei zumindest ein Siebeinsatz (3) derart in einen Strom (5) von Reinigungsmittel innerhalb der Vorrichtung (1) bewegbar ist, dass der Siebeinsatz (3) ober- oder unterhalb einer Beaufschlagungsöffnung (6) eines Reinigungskanals (4) liegt,
**dadurch gekennzeichnet,**
**dass** der Siebeinsatz (3) in der Siebscheibe (2) mit Abstand zu der, der Beaufschlagungsöffnung (6) zugewandten Oberfläche (7) der Siebscheibe (2) angeordnet ist.

2. Vorrichtung nach Anspruch 1,
**dadurch gekennzeichnet,**
**dass** diese in Doppelfunktion auch als Filterungsvorrichtung für eine Schmelze dient.

3. Vorrichtung nach Anspruch 1 oder 2,
**dadurch gekennzeichnet,**
**dass** die Siebscheibe (2) mehrere Siebeinsätze (3) umfasst, von denen zeitgleich zumindest einer in Reinigungsfunktion und zumindest ein anderer in Filterungsfunktion für eine Schmelze befindlich ist.

4. Vorrichtung nach einem der Ansprüche 1 bis 3,
**dadurch gekennzeichnet,**
**dass** von der Beaufschlagungsöffnung (6) des Reinigungskanals (4) gleichzeitig mehrere Siebeinsätze überstrichen sind.

5. Vorrichtung nach einem der Ansprüche 1 bis 4,
**dadurch gekennzeichnet,**
**dass** der Abstand der Siebeinsätze (3) zu der Beaufschlagungsöffnung (6) zwei bis zwölf Millimeter beträgt.
